# EUROPÄISCHE PATENTSCHRIFT

(11) **EP 3 686 498 B1**
(45) Veröffentlichungstag und Bekanntmachung des Hinweises auf die Patenterteilung: **26.10.2022**
(21) Anmeldenummer: 20153271.0
(22) Anmeldetag: 23.01.2020
(51) Int. Cl.: F24D 3/14, F16B 15/00, F16B 15/08

(54) **KLAMMER FÜR DIE FIXIERUNG VON ROHREN AUF EINEM SUBSTRAT, ENTSPRECHENDER KLAMMERPACK UND ENTSPRECHENDE KLAMMERVORRICHTUNG**
CLAMP FOR FIXING TUBES ON A SUBSTRATE, CORRESPONDING CLAMP PACK AND CORRESPONDING CLAMP DEVICE
COLLIER DE SERRAGE POUR LA FIXATION DES TUBES SUR UN SUBSTRAT, PAQUET DE COLLIERS DE SERRAGE CORRESPONDANT ET DISPOSITIF DE COLLIER DE SERRAGE CORRESPONDANT

(30) Priorität: 25.01.2019 DE 102019101858
(43) Veröffentlichungstag der Anmeldung: 29.07.2020
(73) Patentinhaber: Burk Kunststofftechnik GmbH, 35075 Gladenbach Hessen (DE)
(72) Erfinder: CHAPPUIS, Fabrice Philippe Thierry, 73310 Chanaz (FR); BURK, Norbert, 35075 Gladenbach (DE); BURK, Marco, 35236 Breidenbach (DE)
(74) Vertreter: Lavoix

(56) Entgegenhaltungen:
- EP-A1- 2 803 891
- EP-A1- 2 824 336
- WO-A1-03/038291
- FR-A1- 2 961 882

## Beschreibung

Die vorliegende Erfindung betrifft eine Klammer gemäß dem Oberbegriff des Anspruches 1.

Es sind Klammervorrichtungen bekannt, die dazu dienen Warmwasserrohre einer Fußbodenheizung auf einem Substrat zu fixieren.

Beispielhaft sind Klammern aus FR2961882, EP2874336, WO03/038291 und EP2803891 bekannt.

Die Klammervorrichtungen umfassen eine Klammerzuführung mit einem geraden Klammerpackhalter.

Die Klammerpacke umfassen mehrere Klammern, die durch lokales Schmelzen miteinander verbunden sind. Durch die Hitzeeinwirkung und das Schrumpfen nach dem Schmelzvorgang neigen die Klammerpacke zum Verzug und verkanten sich auf dem Klammerpackhalter.

Die vorliegende Erfindung hat zum Ziel, den Klammervorgang wirtschaftlicher und effizienter zu gestalten.

Zu diesem Zweck hat die vorliegende Erfindung eine Klammer gemäß Anspruch 1 zum Gegenstand.

Vorteilhafte Ausgestaltungen der Klammer sind in den Unteransprüchen 2 bis 6 angegeben.

Die Erfindung hat ebenfalls einen Klammerpack und eine Klammervorrichtung gemäß der Ansprüche 7 bis 9 zum Gegenstand.

Beispielhafte Ausgestaltungen der Erfindung werden anhand der folgenden Zeichnungen näher erläutert. Die Zeichnungen zeigen folgendes:
Figur 1 eine Ansicht der Stirnseite einer bekannten Klammer und schematisch eine bekannte Klammerpackaufnahme,
Figur 2 eine Seitenansicht eines bekannten Klammerpacks aus Klammern wie in Figur 1 gezeigt und schematisch eine bekannte Klammerpackaufnahme,
Figur 3 eine der Figur 1 entsprechenden Ansicht einer ersten Ausführungsform der erfindungsgemäßen Klammer und schematisch die Klammerpackaufnahme,
Figur 4 eine der Figur 2 entsprechenden Ansicht eines erfindungsgemäßen Klammerpacks aus Klammern gemäß Figur 3 und schematisch die Klammerpackaufnahme,
Figur 5 eine Seitenansicht der Klammer der Figur 3,
Figur 6 das vergrößerte Detail VI der Figur 5,
Figur 7 das vergrößerte Detail VII der Figur 3,
Figur 8 eine der Figur 3 entsprechenden Ansicht einer Klammer gemäß einer zweiten Ausführungsform der erfindungsgemäßen Klammer,
Figur 9 eine Aufsicht auf die Klammer der Figur 8,
Figur 10 eine der Figur 3 entsprechenden Ansicht einer Klammer gemäß einer dritten Ausführungsform der erfindungsgemäßen Klammer, und
Figur 11 eine Aufsicht auf die Klammer der Figur 10.

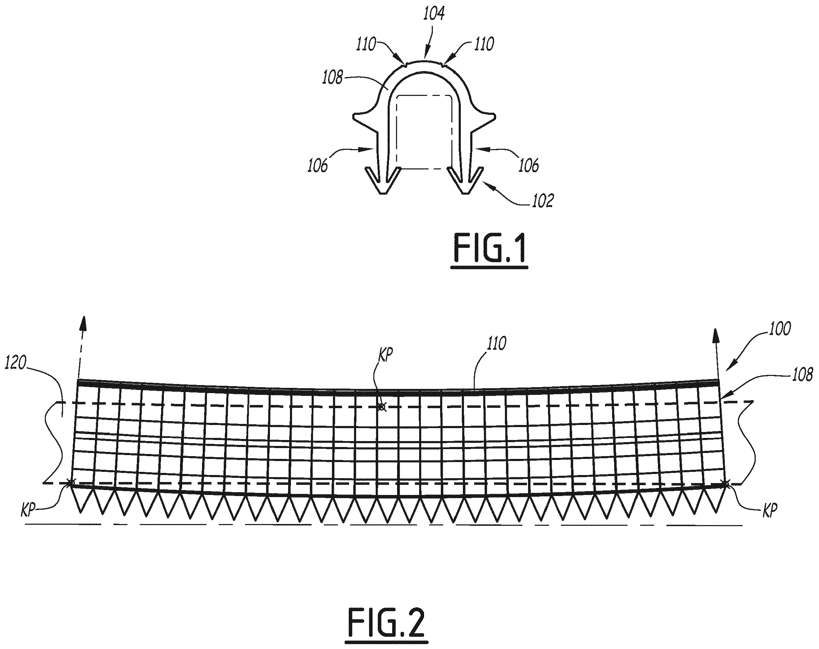

Figur 1 zeigt eine bekannte Klammer 102 in Stirnansicht.

Die Klammer ist bestimmt für die Fixierung von Rohren auf einem Substrat, und umfasst einen Scheitelabschnitt 104, der ein proximales Ende und ein distales Ende aufweist und einen Scheitel bildet, zwei Klammerabschnitte 106, die durch den Scheitelabschnitt verbunden sind. Die Klammer und somit der Scheitelabschnitt weist eine erste und eine zweite Stirnseite auf, von der eine Stirnseite 108 sichtbar ist. Die Klammer weist zwei mit dem Scheitelabschnitt stoffschlüssig verbundene Verbindungselemente 110 auf, mit dem sie mit einer weiteren Klammer, die an eine Stirnseite angrenzt, lösbar verbindbar ist, lösbar verbunden ist oder lösbar verbunden gewesen ist.

Figur 1 zeigt in Seitenansicht einen bekannten Klammerpack 100, der eine Vielzahl an oben beschriebenen Klammern 102 aufweist. Der Klammerpack 100 besteht aus einer Vielzahl von Klammern, die miteinander durch lokale thermische Verformung und Schmelzen verbunden sind. Durch den Schmelz- und anschließenden Abkühlvorgang entsteht zwischen den Klammern ein Winkelversatz sowie schlussendlich zwischen den Endklammern ein entsprechender translatorischer Versatz. Dieser Versatz führt zu einem Kontakt ohne Spiel an Kontaktpunkten KP zwischen dem Klammerpack 100 und einer Klammerpackaufnahme 120 und zu Verkanten der Klammern auf der Klammerpackaufnahme.

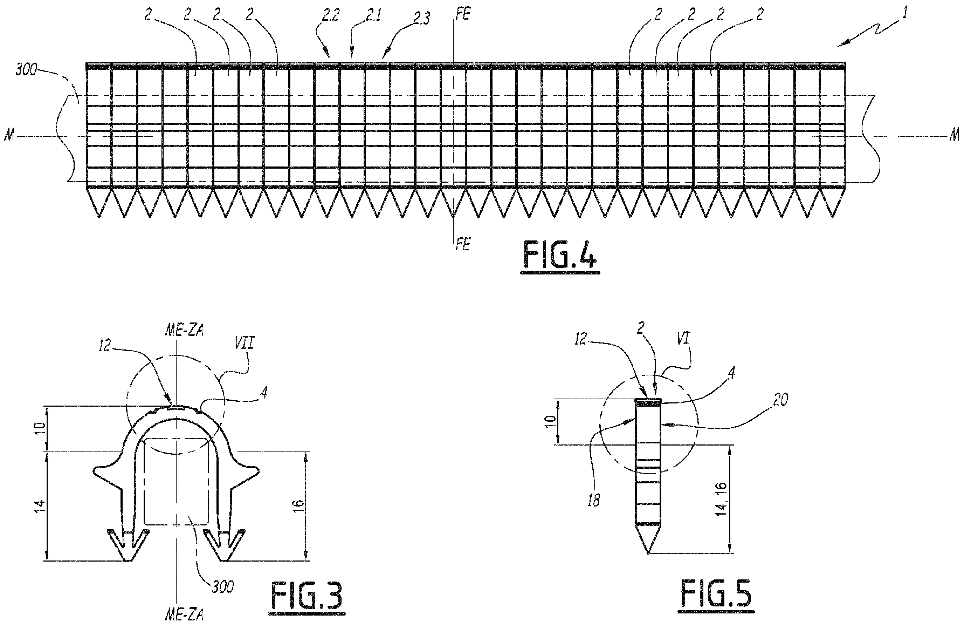

Figur 3 zeigt eine Ansicht der Stirnseite einer ersten Ausführungsform einer erfindungsgemäßen Klammer 2.

Figur 4 zeigt eine Seitenansicht eines erfindungsgemäßen Klammerpacks 1 aus Klammern gemäß Figur 3. Der Klammerpack 1 umfasst eine erste Klammer 2.1 und eine zweite Klammer 2.2, die jeweils gemäß Figur 3 ausgebildet ist. Die erste Klammer und die zweite Klammer sind durch jeweilige Verbindungselemente 4 verbunden. Der Klammerpack 1 umfasst eine dritte Klammer 2.3 gemäß Figur 3 wobei die dritte Klammer und die zweite Klammer ebenfalls durch jeweilige Verbindungselemente 4 verbunden sind.

Soweit nicht anders angegeben, haben die "erste Klammer 2.1", die "zweite Klammer 2.2 " und die "dritte Klammer 2.3" gleiche oder gleichartige Eigenschaften, insbesondere die gleichen Merkmale, die in Zusammenhang einer Klammer 2 beschrieben sind. Das gleiche gilt für "die Klammer", die "weitere Klammer" und die "zusätzliche Klammer". Die Begriffe sind also im Wesentlichen austauschbar und dienen im Wesentlichen nur der Abgrenzung einer entsprechenden Klammer mit einer oder zwei zu dieser jeweils benachbarten Klammer.

Allgemein umfasst der Klammerpack 1 eine Vielzahl an gleichartigen oder identischen Klammern 2, wobei jeweils zwei benachbarte Klammern 2 durch lösbare Verbindungselemente 4 verbunden sind. Die Verbindungselemente 4 umfassen aufgeschmolzene und wieder erstarrte Bereiche der Klammern. Jedes Verbindungselement ist also durch Schweißen entstanden. Die Verbindungselemente 4, in Abwesenheit der Ausgleichselemente (s.u.), rufen durch den Verzug bei der Erstarrung der aufgeschmolzenen Bereiche einen Winkelversatz der jeweiligen Klammer 2 bezüglich der benachbarten Klammer hervor.

Der Klammerpack 1 umfasst Ausgleichselemente 8, die auf der jeweiligen Klammer 2 angeordnet sind und die diesem Winkelversatz soweit entgegenwirken, dass jeweils benachbarte Klammern 2.1, 2.2, 2.3 im Wesentlichen keinen Winkelversatz zueinander aufweisen. Der Klammerpack 1 erstreckt sich also entlang einer geraden Mittellinie M-M.

Jede Klammer 2 ist jeweils eine Klammer für die Fixierung von Rohren auf einem Substrat.

Im Folgenden wird Beispielhaft die erste Klammer 2.1 beschrieben.

Die erste Klammer 2.1 umfasst einen Scheitelabschnitt 10, der ein proximales Ende und ein distales Ende aufweist und einen Scheitel 12 bildet, und zwei Klammerabschnitte 14, 16, die durch den Scheitelabschnitt verbunden sind. Jeder Klammerabschnitt 14, 16 weist ein distales Ende mit Widerhaken auf. Ein proximales Ende jedes Klammerabschnitts 14, 16 ist mit dem distalen Ende der Klammer 2.1 verbunden.

Der Scheitelabschnitt 10 weist eine erste und eine zweite Stirnseite 18, 20 auf. Die Klammer weist eine Mittelebene ME auf, die ebenfalls eine Symmetrieebene der Klammer bildet. Die zwei Klammerabschnitte 14, 16 befinden sich auf unterschiedlichen Seiten der Mittelebene ME. Der Scheitelabschnitt 10 definiert eine Zentralachse ZA, die in der Mittelebene liegt und sich in Richtung vom proximalen zum distalen Ende erstreckt. Die Klammer 2 weist ebenfalls eine Frontalebene FE auf, die senkrecht zur Mittelebene ME verläuft und durch die Zentralachse verläuft. Die Klammer 2 ist im Wesentlichen zur Frontalebene FE symmetrisch.

Konkret weist die erste Klammer zwei mit dem Scheitelabschnitt stoffschlüssig verbundene Verbindungselemente 4 auf, mit denen sie mit einer benachbarten gleichartigen Klammer, zum Beispiel 2.2, die an die erste Stirnseite 18 angrenzt, lösbar verbunden ist. Die Lösbarkeit wird durch Auftrennen der wiedererstarrten Bereiche bzw. Verbindungselemente 4 hergestellt. Diese zwei Verbindungselemente 4 sind auf gegenüberliegenden Seiten der Mittelebene angeordnet.

Die Verbindungselemente 4 definieren in Zentralachsrichtung einen Verbindungselementbereich 22 der Klammer, in dem sich die Verbindungselemente erstrecken.

Die erste Klammer 2.1 weist einen Ausgleichsbereich 24 auf, der sich in Zentralachsrichtung zwischen dem Verbindungselementbereich 22 und dem Scheitel 12 erstreckt. Die erste Klammer 2.1 weist an der ersten Stirnseite eines der Ausgleichselemente 8 auf, das dazu ausgebildet ist, einem, durch das Verbindungselement 4 hervorgerufenen, Winkelversatz der Klammer 2.1 bezüglich der zweiten, benachbarten Klammer 2.2 entgegenzuwirken. Dieses Ausgleichselement 4 ist im Ausgleichsbereich 24 angeordnet. Das Ausgleichselement 4 wirkt also wie ein Anschlag, der die Drehung von zwei aneinander grenzenden Klammern 2 um die durch die Verbindungselemente 4 gebildeten Drehachsen hemmt.

Die zweite Klammer 2.2 weist ebenfalls einen Ausgleichsbereich 24 auf, der sich in Zentralachsrichtung zwischen ihrem Verbindungselementbereich 22 und ihrem Scheitel 12 erstreckt. Die zweite Klammer 2.2 weist an ihrer zweiten Stirnseite 20 ein Ausgleichselement 8 auf, das dazu ausgebildet ist, einem, durch das Verbindungselement 4 hervorgerufenen, Winkelversatz der Klammer 2.2 bezüglich der ersten Klammer entgegenzuwirken. Dieses Ausgleichselement ist im Ausgleichsbereich angeordnet.

Das oder jedes Ausgleichselement 8 ist ein von der ersten Stirnseite vorstehender Vorsprung 26, der näher am proximalen Ende der Klammer als das oder die jeweiligen Verbindungselement(e) 4 angebracht ist, wobei der Vorsprung 26 vorzugsweise stoffschlüssig, insbesondere in einem Stück, mit dem Scheitelabschnitt gefertigt ist. Der Vorsprung 26 ist zum Beispiel durch Spritzguss mit der Klammer 2 gefertigt.

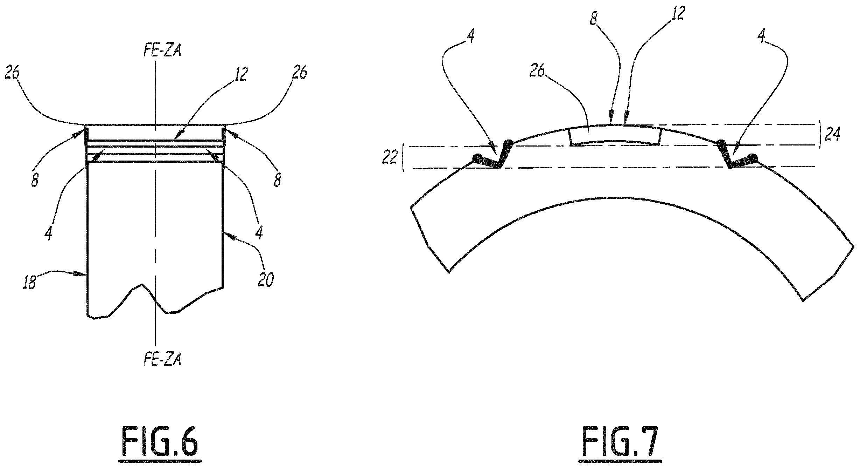

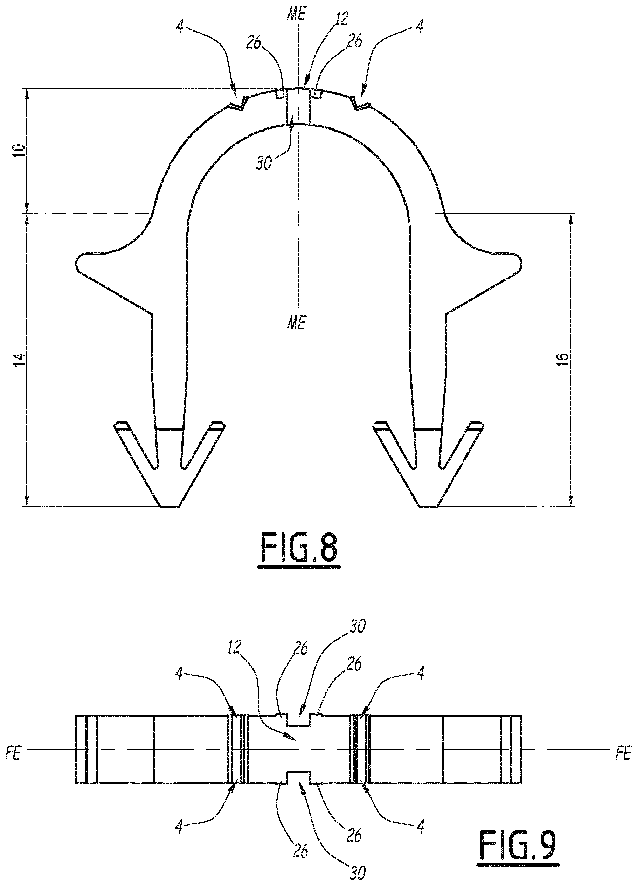

Der Vorsprung 26 erstreckt sich jeweils in Zentralachsrichtung bis zum Scheitel 12. Gemäß den Ausführungsbeispielen der Figuren 3 bis 9 erstreckt sich der oder jeder Vorsprung 26 bis zum Verbindungselementbereich 22, überdeckt diese aber nicht oder nur unwesentlich (siehe Figuren 7 und 9).

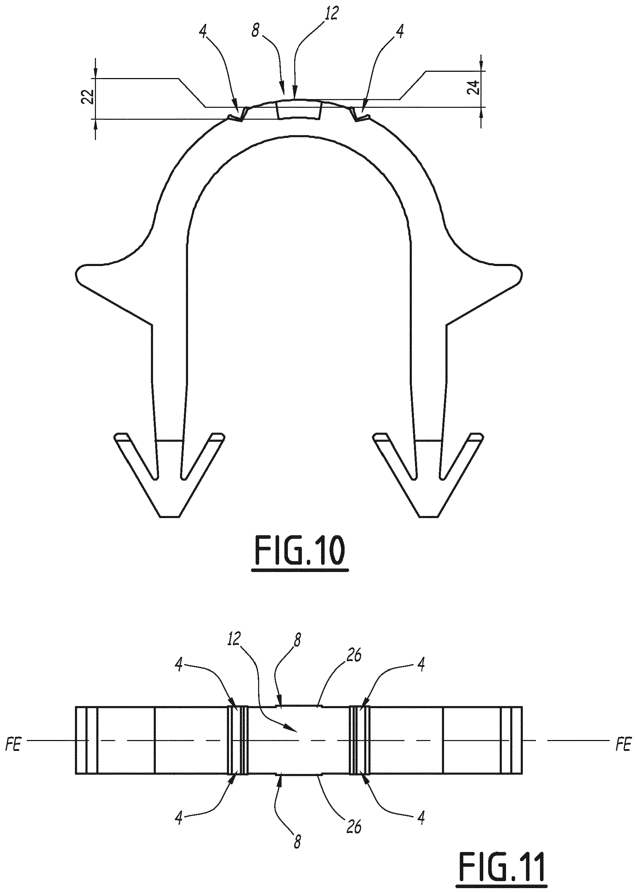

Gemäß einer dritten Ausführungsform überdeckt der oder jeder Vorsprung 26 die Verbindungselementbereich 22 in Richtung der Zentralachse zu einem wesentlichen Teil oder ganz überdecken (siehe Figur 10)

Das oder die Verbindungelemente 4 ist/sind jeweils eine lokal verschweißte und verformte Zone des Scheitelabschnitts. Beispielsweise ist jedes Verbindungselement 4 eine V-förmige oder U-förmige lokale Einbuchtung der Klammer 2.

Die erste Klammer 2.1 weist mindestens ein mit dem Scheitelabschnitt 10 stoffschlüssig verbundenes zusätzliches Verbindungselement 4 auf, mit dem sie mit der dritten, zusätzlichen und gleichartigen Klammer 2.3, die an die zweite Stirnseite 20 der ersten Klammer 2.1 angrenzt, lösbar verbunden ist. Die erste Klammer 2.1 weist an der zweiten Stirnseite 20 ein zusätzliches Ausgleichselement 8 auf, das dazu ausgebildet ist, einem, durch das zusätzliche Verbindungselement 4 hervorgerufenen, Winkelversatz der Klammer 2.1 bezüglich der zusätzlichen Klammer 2.3 entgegenzuwirken. Das zusätzliche Ausgleichselement 8 ist ebenfalls im Ausgleichsbereich 24 angeordnet.

Mindestens ein oder jedes Ausgleichselement 8 der jeweiligen Klammer 2 erstreckt sich über den Scheitel 12.

Alternativ kann auch eines oder mehrere der Ausgleichselemente 8 vom Scheitel 12 beabstandet sein (nicht dargestellt).

Gemäß der zweiten Ausführungsform weist der Scheitelabschnitt 10 mindestens eine Ausnehmung 30 auf, die in senkrechter Richtung von der Frontalebene FE weg offen ist, insbesondere wobei die Ausnehmung in Zentralachsrichtung in proximaler und distaler Richtung offen ist (Figuren 8 und 9). Wie auf diesen Figuren sichtbar, ist in diesem Fall der Vorsprung 26 zweigeteilt und erstreckt sich beiderseits der Ausnehmung 30.

Der Klammerpack 1 umfasst eine erste Klammer 2.1 wie vorstehend beschrieben, und eine zweite Klammer 2.2 wie vorstehend beschrieben. Die erste Klammer 2.1 und die zweite Klammer 2.2 sind durch die jeweiligen Verbindungselemente 4 verbunden. Zumindest das Ausgleichselement 8 der ersten Klammer 2.1 stützt sich auf einem Ausgleichselement 8 der zweiten Klammer ab, so dass diese beiden Klammern 2.1, 2.2 im Wesentlichen keinen Winkelversatz zueinander aufweisen.

Alternativ kann sich das Ausgleichselement 8 der ersten Klammer 2.1 auch auf einer der Stirnseiten 18, 20 der zweiten Klammer 2.2 abstützen (nicht dargestellt), zum Beispiel falls die zweite Klammer 2.2 kein zur ersten Klammer gerichtetes Ausgleichselement 8 aufweist. In diesem Falle ist die wirksame Erstreckung des Ausgleichselements 8 der ersten Klammer gleich der gesamten wirksamen Breite der aneinander liegenden Ausgleichselemente 8 der ersten und zweiten Klammer 2.1, 2.2 der dargestellten Ausführungsformen.

Vorteilhafterweise fluchten die Klammerabschnitte dieser Klammern in einer Richtung senkrecht zur Frontalebene FE.

Der Klammerpack 1 umfasst mindestens eine dritte Klammer 2.3 wie oben beschrieben, wobei die erste Klammer und die dritte Klammer durch die jeweiligen Verbindungselemente 4 verbunden sind. Zumindest das Ausgleichselement 8 der ersten Klammer 2.1 stützt sich auf einem Ausgleichselement 8 der dritten Klammer 2.3 ab, so dass diese beiden Klammern 2.1, 2.3 im Wesentlichen keinen Winkelversatz zueinander aufweisen. Alternativ kann sich das Ausgleichselement 8 der ersten Klammer auch auf einer der Stirnseiten 18, 20 der dritten Klammer 2.3 abstützen. Vorteilhafterweise fluchten die Klammerabschnitte dieser Klammern in einer Richtung senkrecht zur Frontalebene.

Die Erfindung umfasst eine nicht dargestellte Klammervorrichtung, umfassend eine Klammereinheit, die dazu ausgebildet ist, Klammern in ein Substrat zu klammern. Die Klammervorrichtung umfasst eine Klammerzuführung mit einer geraden Klammerpackaufnahme 300 und ein Klammerpack. Der Klammerpack 1 ist ein Klammerpack 1 wie oben beschrieben. Dadurch, dass der Klammerpack 1 geradlinig ist wird der Klammerpack an jeder Stelle mit Spiel auf der geraden Klammerpackaufnahme gehalten. Die Klammerpackaufnahme ist im Wesentlichen quaderförmig mit einem rechteckigen Querschnitt. Die Zuführung der Klammern zur Klammereinheit ist also sichergestellt und führt zu einer schnellen und zuverlässigen Klammeroperation.

## Patentansprüche

1. Klammer (2; 2.1; 2.2; 2.3) für die Fixierung von Rohren auf einem Substrat, umfassend
- einen Scheitelabschnitt (10), der ein proximales Ende und ein distales Ende aufweist und einen Scheitel (12) bildet,
- zwei Klammerabschnitte (14, 16), die durch den Scheitelabschnitt verbunden sind,
wobei der Scheitelabschnitt eine erste und eine zweite Stirnseite (18, 20) aufweist,
wobei die Klammer eine Frontalebene FE und eine Mittelebene ME aufweist und sich die zwei Klammerabschnitte auf unterschiedlichen Seiten der Mittelebene befinden,
wobei der Scheitelabschnitt eine Zentralachse ZA definiert, die in der Mittelebene ME liegt und sich in Richtung vom proximalen zum distalen Ende erstreckt,
wobei die Klammer mindestens ein oder mehrere mit dem Scheitelabschnitt stoffschlüssig verbundene(s) Verbindungselement(e) (4) aufweist, mit dem die Klammer mit einer weiteren, insbesondere gleichartigen, Klammer (2.2), die an die erste Stirnseite angrenzt, lösbar verbindbar ist, lösbar verbunden ist oder lösbar verbunden gewesen ist,
wobei das oder die Verbindungselement(e) in Zentralachsrichtung einen Verbindungselementbereich (22) der Klammer definiert/definieren,
wobei die Klammer einen Ausgleichsbereich (24) aufweist, der sich in Zentralachsrichtung zwischen dem Verbindungselementbereich und dem Scheitel erstreckt,
wobei die Klammer an der ersten Stirnseite ein Ausgleichselement (8) aufweist, das dazu ausgebildet ist, einem, durch das Verbindungselement hervorgerufenen, Winkelversatz der Klammer bezüglich der weiteren Klammer (2.2) entgegenzuwirken,
wobei das Ausgleichselement im Ausgleichsbereich angeordnet ist,
**dadurch gekennzeichnet, dass** das oder die Verbindungselement(e) (4) aufgeschmolzene und wieder erstarrte Bereiche der Klammer umfasst oder umfassen und eine lokal verschweißte und verformte Zone des Scheitelabschnitts ist/sind.

2. Klammer nach Anspruch 1, wobei das Ausgleichselement ein von der ersten Stirnseite vorstehender Vorsprung (26) ist, wobei der Vorsprung vorzugsweise stoffschlüssig, insbesondere in einem Stück, mit dem Scheitelabschnitt (10) gefertigt ist.

3. Klammer nach Anspruch 2, wobei der Vorsprung (26) sich in Zentralachsrichtung bis zum Scheitel (12) erstreckt und/oder der Vorsprung (26) sich bis zum Verbindungselementbereich (22) erstreckt und dort endet oder diese überdeckt.

4. Klammer nach einem der vorhergehenden Ansprüche,
wobei die Klammer mindestens ein mit dem Scheitelabschnitt (10) stoffschlüssig verbundenes zusätzliches Verbindungselement (4) aufweist, mit dem sie mit einer zusätzlichen, insbesondere gleichartigen, Klammer (2.3), die an die zweite Stirnseite angrenzt, lösbar verbindbar ist, lösbar verbunden ist oder lösbar verbunden gewesen ist,
**dadurch gekennzeichnet, dass** die Klammer an der zweiten Stirnseite ein zusätzliches Ausgleichselement (8) aufweist, das dazu ausgebildet ist, einem, durch das zusätzliche Verbindungselement hervorgerufenen, Winkelversatz der Klammer bezüglich der zusätzlichen Klammer (2.3) entgegenzuwirken, und
**dadurch gekennzeichnet, dass** das zusätzliche Ausgleichselement im Ausgleichsbereich (24) angeordnet ist.

5. Klammer nach einem der vorhergehenden Ansprüche, wobei sich mindestens ein Ausgleichselement (8) über den Scheitel (12) erstreckt oder von diesem beabstandet ist.

6. Klammer nach einem der vorhergehenden Ansprüche, wobei der Scheitelabschnitt (10) mindestens eine Ausnehmung (30) aufweist, die in senkrechter Richtung von der Frontalebene FE weg offen ist, insbesondere wobei die Ausnehmung in Zentralachsrichtung in proximaler und distaler Richtung offen ist.

7. Klammerpack, umfassend
- eine erste Klammer (2.1) gemäß einem der vorhergehenden Ansprüche, und
- eine zweite Klammer (2.2) gemäß einem der vorhergehenden Ansprüche,
wobei die erste Klammer und die zweite Klammer durch die jeweiligen Verbindungselemente (4) verbunden sind und wobei zumindest das Ausgleichselement (8) der ersten Klammer sich entweder auf einer der Stirnseiten der zweiten Klammer oder auf einem Ausgleichselement der zweiten Klammer abstützt, so dass diese beiden Klammern im Wesentlichen keinen Winkelversatz zueinander aufweisen, und
wobei die Klammerabschnitte dieser beiden Klammern in einer Richtung senkrecht zur Mittelebene fluchten.

8. Klammerpack nach Anspruch 7, umfassend mindestens eine dritte Klammer (2.3) gemäß einem der Ansprüche 1 bis 6
wobei die erste Klammer und die dritte Klammer durch die jeweiligen Verbindungselemente (4) verbunden sind und wobei zumindest das Ausgleichselement der ersten Klammer sich entweder auf einer der Stirnseiten der dritten Klammer oder auf einem Ausgleichselement der dritten Klammer abstützt, so dass diese beiden Klammern im Wesentlichen keinen Winkelversatz aufweisen, und
wobei die Klammerabschnitte dieser beiden Klammern in einer Richtung senkrecht zur Mittelebene ME fluchten.

9. Klammervorrichtung umfassend
eine Klammereinheit, die dazu ausgebildet ist, Klammern in ein Substrat zu klammern,
eine Klammerzuführung mit einer geraden Klammerpackaufnahme (300), und
ein Klammerpack (1),
**dadurch gekennzeichnet, dass** der Klammerpack ein Klammerpack nach einem der Ansprüche 7 oder 8 ist und der Klammerpack an jeder Stelle mit Spiel auf der Klammerpackaufnahme gehalten ist.

## Claims

1. A clamp (2; 2.1; 2.2; 2.3) for fastening tubes to a substrate, comprising
- an apex portion (10) having a proximal end and a distal end and forming an apex (12),
- two clamp sections (14, 16) connected by the apex portion,
wherein the apex portion has first and second end faces (18, 20),
wherein the clamp has a frontal plane FE and a median plane ME and the two clamp sections are on different sides of the median plane,
wherein the apex portion defines a central axis ZA which lies in the median plane ME and extends from the proximal end to the distal end,
wherein the clamp has at least one or more connecting element(s) (4) that is/are firmly bonded to the apex portion and by means of which the clamp can be detachably connected, is detachably connected or has been detachably connected to a further, in particular similar, clamp (2.2) that adjoins the first face,
wherein the fastener(s) define(s) a fastener area (22) of the clamp in the central axis direction,
wherein the clamp has a compensating area (24) extending in the central axis direction between the fastener area and the apex,
wherein the clamp has a compensating element (8) on the first face, which is designed to counteract an angular offset of the clamp in relation to the further clamp (2.2) caused by the connecting element,
wherein a compensating element is arranged in the compensating area, **characterized in that** the connecting element(s) (4) comprise(s) molten and re-solidified areas of the clamp and is/are a locally welded and deformed zone of the apex portion. J 2

2. A clamp according to Claim 1, wherein the compensating element is a projection (26) projecting from the first face, wherein the projection is preferentially manufactured in a firmly bonded manner, in particular in one piece, with the apex portion (10).

3. The clamp according to Claim 2, wherein the projection (26) extends in the central axis direction to the apex (12) and/or the projection (26) extends to and terminates at or overlaps the fastener area (22).

4. A clamp according to any one of the preceding claims,
wherein the clamp has at least one additional connecting element (4) that is connected firmly bonded to the apex portion (10) and by means of which it is detachably connectable to, is detachably connected to or has been detachably connected to an additional, in particular similar, clamp (2.3) that adjoins the second face,
**characterized in that** the clamp has an additional compensating element (8) on the second face, which is designed to counteract an angular offset of the clamp in relation to the additional clamp (2.3) caused by the additional connecting element, and
**characterized in that** the additional compensation element is arranged in the compensating area (24).

5. a clamp according to any one of the preceding claims, wherein at least one compensating element (8) extends over or is spaced from the apex (12).

6. a clamp according to any one of the preceding claims, wherein the apex portion (10) comprises at least one recess (30) that is open in a perpendicular direction away from the frontal plane FE, in particular wherein the recess is open in a proximal and distal direction in the central axis direction.

7. Clamp pack, comprising
- a first clamp (2.1) according to any one of the preceding claims, and
- a second clamp (2.2) according to any of the preceding claims,
wherein the first clamp and the second clamp are connected by respective connecting elements (4) and wherein at least the compensating element (8) of the first clamp is supported either on one of the faces of the second clamp or on a compensating element of the second clamp, so that these two clamps have no substantial angular offset relative to each other, and
wherein the clamp portions of these two clamps align in a direction perpendicular to the median plane.

8. A clamp pack according to Claim 7, comprising at least one third clamp (2.3) according to any one of Claims 1 to 6
wherein the first clamp and the third clamp are connected by respective connecting elements (4) and wherein at least the compensating element of the first clamp is supported either on one of the faces of the third clamp or on a compensating element of the third clamp, so that these two clamps have substantially no angular offset, and
wherein the clamp portions of these two clamps are aligned in a direction perpendicular to the centre plane ME.

9. A clamping device comprising
a clamping unit shaped to engage clamps into a substrate,
a clamp feeder with a straight clamp pack mount (300), and
a clamp pack (1),
**characterized in that** the clamp pack is a clamp pack according to any one of Claims 7 or 8, and the clamp pack is held with clearance on the clamp pack mount at each location.

## Revendications

1. Agrafe (2 ; 2.1 ; 2.2 ; 2.3) pour la fixation de tubes sur un substrat, comprenant
- une partie de sommet (10), qui présente une extrémité proximale et une extrémité distale et forme un sommet (12),
- deux parties d'agrafe (14, 16), qui sont reliées par la partie de sommet,
dans laquelle la partie de sommet présente une première et une seconde face frontale (18, 20),
dans laquelle l'agrafe présente un plan frontal FE et un plan médian ME et les deux parties d'agrafe se trouvent sur des faces différentes du plan médian,
dans laquelle la partie de sommet définit un axe central ZA, qui se situe dans le plan médian ME et s'étend dans une direction de l'extrémité proximale à l'extrémité distale,
dans laquelle l'agrafe présente au moins un ou plusieurs élément(s) de liaison (4) relié(s) à la partie de sommet par liaison de matière, avec lequel l'agrafe peut être reliée de manière libérable, est reliée de manière libérable ou a été reliée de manière libérable à une autre agrafe (2.2), en particulier de même type, qui est adjacente à la première face frontale,
dans laquelle le ou les élément(s) de liaison définit, dans la direction d'axe central une zone d'élément de liaison (22) de l'agrafe,
dans laquelle l'agrafe présente une zone de compensation (24), qui s'étend dans la direction d'axe central entre la zone d'élément de liaison et le sommet,
dans laquelle l'agrafe présente sur la première face frontale un élément de compensation (8), qui est réalisé pour s'opposer à un décalage angulaire de l'agrafe par rapport à l'autre agrafe (2.2) provoqué par l'élément de liaison,
dans laquelle l'élément de compensation est disposé dans la zone de compensation, **caractérisé en ce que** le ou les élément(s) de liaison (4) comprend ou comprennent des zones fondues et resolidifiées de l'agrafe et est/sont une zone localement soudée et déformée de la partie de sommet. J 2

2. Agrafe selon la revendication 1, dans laquelle l'élément de compensation est une saillie (26) dépassant de la première face frontale, dans laquelle la saillie est de préférence fabriquée par liaison de matière, en particulier en une seule pièce, avec la partie de sommet (10).

3. Agrafe selon la revendication 2, dans laquelle la saillie (26) s'étend dans la direction d'axe central jusqu'au sommet (12) et/ou la saillie (26) s'étend jusqu'à la zone d'élément de liaison (22) et s'y termine ou recouvre celle-ci.

4. Agrafe selon l'une quelconque des revendications précédentes,
dans laquelle l'agrafe présente au moins un élément de liaison (4) supplémentaire relié par liaison de matière à la partie de sommet (10), avec lequel elle peut être reliée de manière libérable, est reliée de manière libérable ou a été reliée de manière libérable à une agrafe (2.3) supplémentaire, en particulier de même type, qui est adjacente à la deuxième face frontale,
**caractérisée en ce que** l'agrafe présente sur la deuxième face frontale un élément de compensation (8) supplémentaire, qui est réalisé pour s'opposer à un décalage angulaire de l'agrafe par rapport à l'agrafe (2.3) supplémentaire provoqué par l'élément de liaison supplémentaire, et
**caractérisée en ce que** l'élément de compensation supplémentaire est disposé dans la zone de compensation (24).

5. Agrafe selon l'une quelconque des revendications précédentes, dans laquelle au moins un élément de compensation (8) s'étend au-dessus du sommet (12) ou est espacé de celui-ci.

6. Agrafe selon l'une quelconque des revendications précédentes, dans laquelle la partie de sommet (10) présente au moins un évidement (30), qui est ouvert dans la direction perpendiculaire à distance du plan frontal FE, en particulier dans laquelle l'évidement est ouvert dans la direction d'axe central dans les directions proximale et distale.

7. Paquet d'agrafes, comprenant
- une première agrafe (2.1) selon l'une quelconque des revendications précédentes, et
- une deuxième agrafe (2.2) selon l'une quelconque des revendications précédentes,
dans lequel la première agrafe et la deuxième agrafe sont reliées par les éléments de liaison (4) respectifs et dans lequel au moins l'élément de compensation (8) de la première agrafe s'appuie soit sur l'une des faces frontales de la deuxième agrafe soit sur un élément de compensation de la deuxième agrafe, de sorte que ces deux agrafes ne présentent sensiblement aucun décalage angulaire l'une par rapport à l'autre, et
dans lequel les parties d'agrafe de ces deux agrafes sont alignées dans une direction perpendiculaire au plan médian.

8. Paquet d'agrafes selon la revendication 7, comprenant au moins une troisième agrafe (2.3) selon l'une quelconque des revendications 1 à 6
dans lequel la première agrafe et la troisième agrafe sont reliées par les éléments de liaison (4) respectifs et dans lequel au moins l'élément de compensation de la première agrafe s'appuie soit sur une des faces frontales de la troisième agrafe soit sur un élément de compensation de la troisième agrafe, de sorte que ces deux agrafes ne présentent sensiblement aucun décalage angulaire, et dans lequel les parties d'agrafe de ces deux agrafes sont alignées dans une direction perpendiculaire au plan médian ME.

9. Dispositif d'agrafage comprenant
une unité d'agrafage, qui est réalisée pour agrafer des agrafes dans un substrat,
une alimentation en agrafes avec un logement de paquet d'agrafes (300) droit, et
un paquet d'agrafes (1),
**caractérisé en ce que** le paquet d'agrafes est un paquet d'agrafes selon l'une quelconque des revendications 7 ou 8 et le paquet d'agrafes est maintenu avec du jeu en tout point sur le logement de paquet d'agrafes.
